# EUROPEAN PATENT SPECIFICATION

(11) **EP 2 832 411 B1**
(45) Date of publication and mention of the grant of the patent: **05.12.2018**
(21) Application number: 12872701.3
(22) Date of filing: 30.03.2012
(51) Int. Cl.: C04B 41/00, C04B 41/50, C04B 41/85, C04B 35/565, C04B 37/00, B01D 39/20, B01D 46/24, F01N 3/022, C04B 111/00

(54) **HONEYCOMB FILTER**
WABENSTRUKTURFILTER
FILTRE EN NID D'ABEILLE

(43) Date of publication of application: 04.02.2015
(73) Proprietor: Ibiden Co., Ltd, Ogaki-shi, Gifu 503-8604 (JP)
(72) Inventor: USHIDA, Takeshi, Ibi-gun Gifu 501-0695 (JP); ORITO, Akinori, Ibi-gun Gifu 501-0695 (JP); NAGATSU, Yuichi, Ibi-gun Gifu 501-0695 (JP)
(74) Representative: Marschall, Stefan
(86) International application number: PCT/JP2012/058747
(87) International publication number: WO 2013/145319

(56) References cited:
- EP-A1- 2 008 987
- WO-A1-2012/030534
- FR-A1- 2 902 424
- JP-A- 2002 066 335
- JP-A- 2007 144 371
- JP-A- 2007 144 371

## Description

### TECHNICAL FIELD

The present invention relates to a honeycomb filter.

### BACKGROUND ART

The exhaust gas discharged from internal combustion engines such as diesel engines contains particulate matter (hereinafter also referred to as PM) such as soot and the like, and in recent years, the harm caused to people and the environment by this PM has become an issue. Furthermore, because the exhaust gas also contains harmful gas components such as CO, HC and NOₓ, the effect of these harmful gas components on people and the environment is also a cause for concern.

Accordingly, in order to trap the PM in the exhaust gas and purge the harmful gas components, an exhaust gas cleaning device is used.

This type of exhaust gas cleaning device is prepared using a honeycomb filter composed of a material such as a ceramic. The exhaust gas can be cleaned by passing the exhaust gas through the honeycomb filter.

In a honeycomb filter used in an exhaust gas cleaning device to trap the PM in an exhaust gas, a multitude of cells separated by cell walls are disposed in parallel in the longitudinal direction, and each cell is sealed at one end section. Consequently, the exhaust gas that flows into a given cell necessarily passes through a cell wall that separates the cells, and then flows out of another cell. In other words, if this type of honeycomb filter is provided in an exhaust gas cleaning device, then the PM contained in the exhaust gas is captured by the cell walls as it passes through the honeycomb filter. Accordingly, the cell walls of the honeycomb filter function as a filter that cleans the exhaust gas.

In the initial stage of PM trapping by the honeycomb filter, the PM infiltrates the fine pores in the cell walls and is trapped inside the cell walls, generating a "depth filtration" state in which the fine pores in the cell walls are blocked. In this depth filtration state, PM continues to accumulate inside (the fine pores in) the cell walls. As a result, a problem can occur in that immediately after the trapping of PM begins, the effective porosity of the cell walls is reduced, causing the pressure loss to suddenly increase.

Patent Document 1 discloses a honeycomb filter in which a composite region is formed by depositing particles on the surface layer portions of the cell walls that constitute the honeycomb filter.

Patent Document 2 relates to a porous discriminating layer formed on a ceramic support having at least one porous wall.

Patent Document 3 discloses a catalyst for purifying exhaust gas from diesel engine, having a catalyst layer on a cell partition wall including secondary particles of porous oxide whose average diameter is two to eight times the mean pore diameter of the cell partition wall.

Patent Document 4 describes a honeycomb structure for use as fine particle collection filter for diesel engine, having a porous outer wall of specific porosity, to cover the outer periphery of honeycomb segments.

### PRIOR ART DOCUMENTS

### PATENT DOCUMENTS

Patent Document 1: WO 2010/110011 pamphlet
Patent Document 2: WO 2012/030534 A1
Patent Document 3 : JP 2007-144371
Patent Document 4 : EP 2 008 987 A1

### DISCLOSURE OF INVENTION

### PROBLEMS INVENTION AIMS TO SOLVE

In a honeycomb filter used for trapping PM in an exhaust gas, regeneration processing of the honeycomb filter must be performed to incinerate and remove the trapped PM.

The PM accumulated on the surface of the filter layer is incinerated in the regeneration process. During the regeneration process, the heat produced by the PM incineration accumulates in the filter layer, causing the temperature of the filter layer to increase. However, the temperature of the cell walls tends to remain low, so that thermal stress develops between the filter layer and the cell walls. Accordingly, a problem arises in that this thermal stress can cause the filter layer to detach from the surface of the cell walls.

The present invention has been made to solve the above problem with an object of providing a honeycomb filter which is resistant to detachment of the filter layer during regeneration processing, while suppressing any sudden increase in pressure loss caused by depth filtration.

### MEANS FOR SOLUTION OF THE PROBLEMS

In order to achieve the above object, a honeycomb filter according to the invention comprises:
a ceramic honeycomb substrate in which a multitude of cells through which a fluid flows are disposed in parallel in a longitudinal direction and are separated by cell walls, each cell being sealed at an end section at either the fluid inlet side or the fluid outlet side, and
a filter layer which, among the surfaces of the cell walls, is formed on the surface of the cell walls of those cells in which the end section at the fluid inlet side is open and the end section at the fluid outlet side is sealed, wherein
the filter layer comprises hollow particles.

In the honeycomb filter according to claim 1, the filter layer formed on the surface of the cell walls of the ceramic honeycomb substrate comprises hollow particles. As a result, the heat capacity of the filter layer can be reduced to a lower level than that of the filter layer formed on the conventional honeycomb filter disclosed in Patent Document 1. Accordingly, in the honeycomb filter according to claim 1, when the PM accumulated on the honeycomb filter is incinerated, an amount of heat that accumulates in the filter layer from the heat generated inside the cells on which the PM has accumulated is small, and the heat can be more easily transmitted through the filter layer and into the cell walls. As a result, the temperature difference between the filter layer and the cells can be reduced, so that the difference in thermal stress caused by this temperature difference can be reduced, enabling detachment of the filter layer to be prevented.

In this description, the term "filter layer" refers to a surface layer which can trap PM, and is formed on the surface of the ceramic honeycomb substrate.

In a honeycomb filter according to claim 2, the degree of solidity of the hollow particles is from 20 to 90%.

A degree of solidity that satisfies the above range is particularly suited to reducing the temperature difference between the filter layer and the cell walls.

If the degree of solidity is less than 20%, then because the strength of the hollow particles tends to weaken, maintaining the shape of the hollow particles becomes difficult. If the degree of solidity exceeds 90%, then because the heat capacity of the filter layer increases, the effect of the invention in preventing detachment of the filter layer by reducing the difference in thermal stress may not be able to be obtained satisfactorily.

In a honeycomb filter according to the invention, the average particle size of the hollow particles is from 0.3 to 2.5 µm. As a result, PM contained within the exhaust gas is deposited mainly on the surface of the filter layer, whereby depth filtration of the PM can be prevented. Accordingly, any sudden increase in pressure loss of the honeycomb filter caused by depth filtration can be prevented.

In a honeycomb filter according to claim 3 of the invention, the hollow particles are composed of a heat-resistant oxide.

Further, in a honeycomb filter according to claim 4, the heat-resistant oxide is at least one selected from the group consisting of alumina, silica, mullite, ceria, zirconia, cordierite, zeolite and titania.

By preparing the hollow particles that constitute the filter layer from a heat-resistant oxide, a honeycomb filter having excellent heat resistance can be obtained without problems such as melting of the filter layer even when a regeneration process is performed to incinerate the PM.

In a honeycomb filter according to claim 5, the thickness of the filter layer is from 10 to 100 µm.

If the thickness of the filter layer is less than 10 µm, then the PM is more likely to undergo depth filtration, which tends to cause increases in pressure loss. On the other hand, if the thickness of the filter layer exceeds 100 µm, then although depth filtration of the PM can be prevented, the pressure loss actually increases because the filter layer is too thick.

### BRIEF DESCRIPTION OF THE DRAWINGS

FIG. 1 is a perspective view schematically illustrating an example of a honeycomb filter according to a first embodiment of the present invention.
FIG. 2(a) is a perspective view schematically illustrating an example of a honeycomb calcined body that constitutes the honeycomb filter illustrated in FIG. 1. FIG. 2(b) is a cross-sectional view along the line A-A of the honeycomb calcined body illustrated in FIG. 2(a).
FIG. 3(a) is an example of an electron microscope photograph of a cross section of the hollow particles that constitute the filter layer, and FIG. 3(b) is a binary image in which the pixels inside the hollow particles in the photograph of FIG. 3(a) have been painted white.
FIG. 4(a), FIG. 4(b) and FIG. 4(c) are side views schematically illustrating examples of the cell structure of the honeycomb calcined body that constitutes the honeycomb filter according to the first embodiment of the present invention.
FIG. 5 is a cross-sectional view schematically illustrating an embodiment of a droplet dispersion step and a carrier gas inflow step.

### EMBODIMENTS FOR CARRYING OUT THE INVENTION

A more detailed description of embodiments of the present invention is provided below.

### (First embodiment)

A first embodiment which represents an embodiment of the honeycomb filter of the present invention is described below.

First is a description of a honeycomb filter according to the first embodiment of the present invention.

The honeycomb filter according to the first embodiment of the present invention comprises:
a ceramic honeycomb substrate in which a multitude of cells through which a fluid flows are disposed in parallel in a longitudinal direction and are separated by cell walls, each cell being sealed at an end section at either the fluid inlet side or the fluid outlet side, and
a filter layer which, among the surfaces of the cell walls, is formed on the surface of the cell walls of those cells in which the end section at the fluid inlet side is open and the end section at the fluid outlet side is sealed, wherein
the filter layer comprises hollow particles.

In the honeycomb filter according to the first embodiment of the present invention, a ceramic honeycomb substrate (ceramic block) is composed of a plurality of honeycomb calcined bodies. Further, the multitude of cells of the honeycomb calcined bodies that constitute the honeycomb filter include large volume cells and small volume cells, and the area of a cross section perpendicular to the longitudinal direction of a large volume cell is larger than the area of a cross section perpendicular to the longitudinal direction of a small volume cell.

In this manner, the honeycomb filter according to the first embodiment of the present invention has a filter layer formed on the surface of the cell walls of the ceramic honeycomb substrate comprising the honeycomb calcined bodies.

In this description, a structure without a filter layer formed on the surface of the cell walls is referred to as a "ceramic honeycomb substrate", and a structure with a filter layer formed on the surface of the cell walls is referred to as a "honeycomb filter", thereby distinguishing between the two.

Furthermore, in the following description, references which simply mention a cross section of a honeycomb calcined body indicate a cross section perpendicular to the longitudinal direction of the honeycomb calcined body. Similarly, references which simply mention the cross-sectional area of a honeycomb calcined body indicate the area of a cross section perpendicular to the longitudinal direction of the honeycomb calcined body.

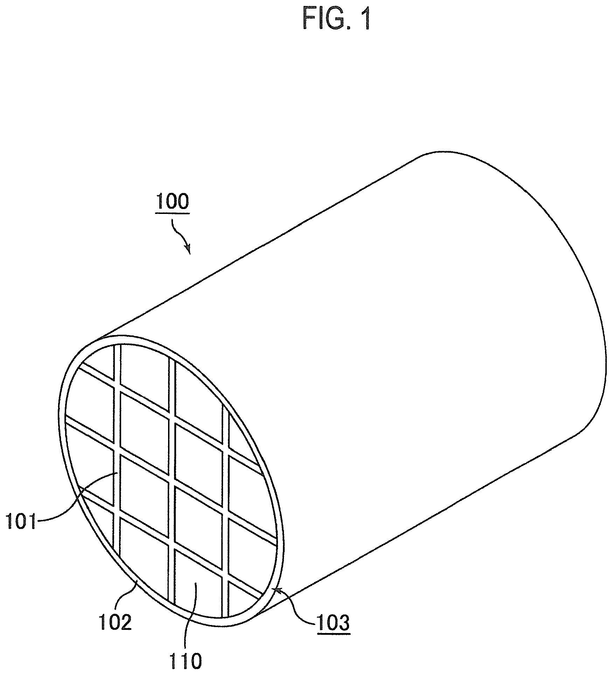

FIG. 1 is a perspective view schematically illustrating an example of the honeycomb filter according to the first embodiment of the present invention.

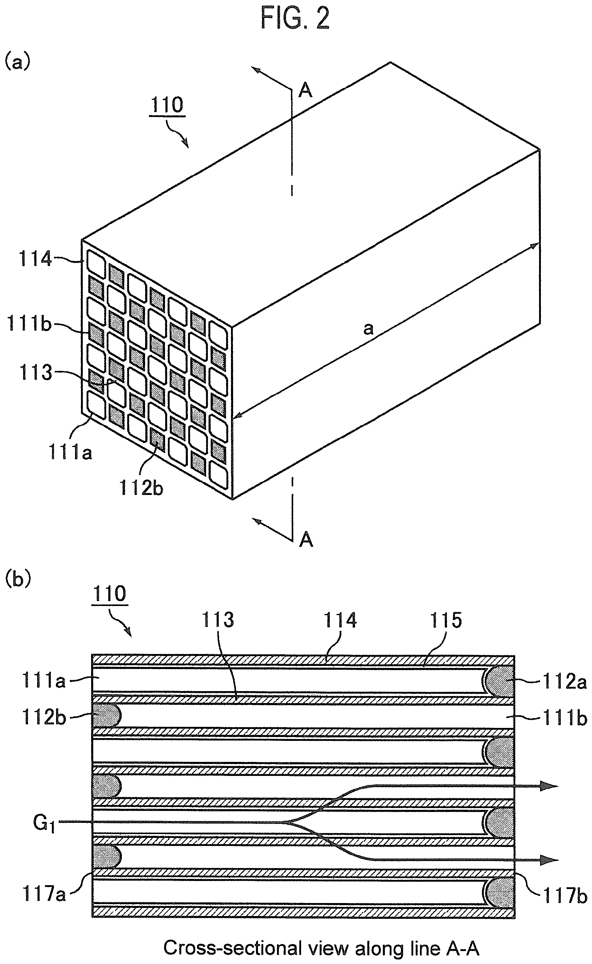

FIG. 2(a) is a perspective view schematically illustrating an example of a honeycomb calcined body that constitutes the honeycomb filter illustrated in FIG. 1. FIG. 2(b) is a cross-sectional view along the line A-A of the honeycomb calcined body illustrated in FIG. 2(a).

In the honeycomb filter 100 illustrated in FIG. 1, a plurality of honeycomb calcined bodies 110 are bundled together via adhesive material layers 101 to form a ceramic honeycomb substrate (ceramic block) 103, and an outer periphery coating layer 102 for preventing leakage of the exhaust gas is formed around the outer periphery of this ceramic honeycomb substrate (ceramic block) 103. The outer periphery coating layer may be formed as needed.

This type of honeycomb filter formed by bundling a plurality of honeycomb calcined bodies is also called an aggregated type honeycomb filter.

Although described in more detail below, the honeycomb calcined bodies 110 which constitute the honeycomb filter 100 are preferably porous bodies formed from silicon carbide or a silicon-containing silicon carbide.

In the honeycomb calcined body 110 illustrated in FIG. 2(a) and FIG. 2(b), a multitude of cells 111a and 111b are disposed in parallel in the longitudinal direction (the direction of arrow a in FIG. 2(a)) and are separated by cell walls 113, and an outer peripheral wall 114 is formed at the outer periphery. One end section of each of the cells 111a and 111b is sealed by a sealing material 112a or 112b.

As illustrated in FIG. 2(b), a filter layer 115 is formed on the surface of the cell walls 113 of the honeycomb calcined body 110. As described below, the filter layer 115 comprises hollow particles. The filter layer 115 is not shown in the honeycomb calcined body 110 illustrated in FIG. 2(a).

In the honeycomb calcined body 110 illustrated in FIG. 2(a) and FIG. 2(b), large volume cells 111a having a cross-sectional area perpendicular to the longitudinal direction that is relatively larger than that of small volume cells 111b, and small volume cells 111b having a cross-sectional area perpendicular to the longitudinal direction that is relatively smaller than that of the large volume cells 111a are arranged alternately.

The shape of the large volume cells 111a in a cross section perpendicular to the longitudinal direction is substantially octagonal, whereas the shape of the small volume cells 111b in a cross section perpendicular to the longitudinal direction is substantially tetragonal.

In the honeycomb calcined body 110 illustrated in FIG. 2(a) and FIG. 2(b), the end sections of the large volume cells 111a on a first end surface 117a side of the honeycomb calcined body 110 are open, and the end sections on a second end surface 117b side are sealed by the sealing material 112a. On the other hand, the end sections of the small volume cells 111b on the second end surface 117b side of the honeycomb calcined body 110 are open, and the end sections on the first end surface 117a side are sealed by the sealing material 112b.

Accordingly, as illustrated in FIG. 2(b), an exhaust gas G₁ introduced into a large volume cell 111a (in FIG. 2(b), the exhaust gas is indicated by G₁, and the flow of the exhaust gas is indicated by the arrows) necessarily flows out from a small volume cell 111b after passing through the cell wall 113 that separates the large volume cell 111a from the small volume cell 111b. Because the PM and the like in the exhaust gas G₁ is trapped when the exhaust gas G₁ passes through the cell wall 113, the cell walls 113 that separate the large volume cells 111a and the small volume cells 111b function as filters.

In this manner, gases such as exhaust gases can be passed through the large volume cells 111a and the small volume cells 111b of the honeycomb calcined body 110. When a gas such as an exhaust gas is introduced in the direction illustrated in FIG. 2(b), the end section on the first end surface 117a side of the honeycomb calcined body 110 (the end section where the small volume cells 111b are sealed) is called the fluid inlet side end section, and the end section on the second end surface 117b side of the honeycomb calcined body 110 (the end section where the large volume cells 111a are sealed) is called the fluid outlet side end section.

In other words, the large volume cells 111a in which the end section at the fluid inlet side is open can be called fluid inlet side cells 111a, and the small volume cells 111b in which the end section at the fluid outlet side is open can be called fluid outlet side cells 111b.

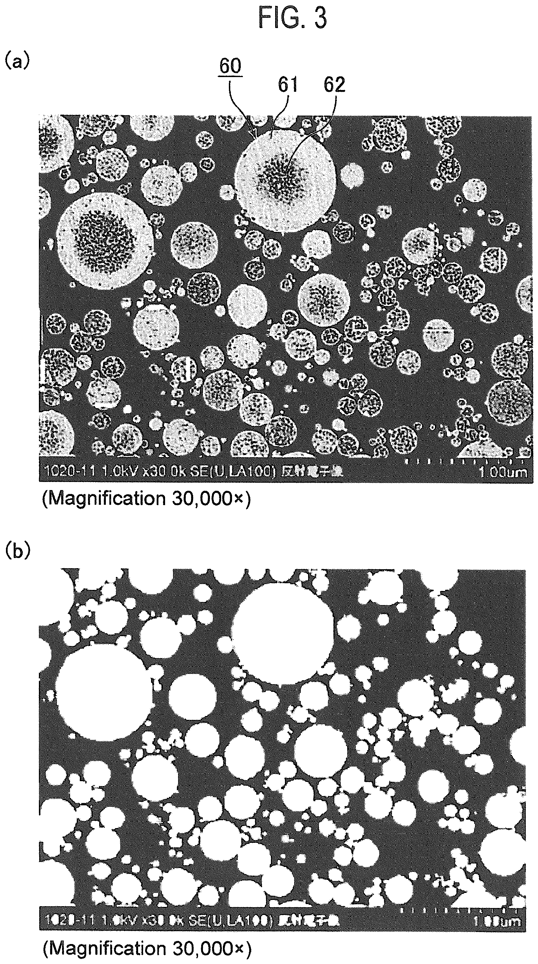

FIG. 3(a) is an example of an electron microscope photograph of a cross section of the hollow particles that constitute the filter layer. The magnification is 30,000×.

FIG. 3(b) is a binary image in which the pixels inside the hollow particles in the photograph of FIG. 3(a) have been painted white.

In FIG. 3(a), a cross section of the hollow particles that constitute the filter layer is shown. The hollow particles shown in FIG. 3(a) are alumina particles prepared using a 0.1 M solution of aluminum nitrate as a raw material.

In a hollow particle 60 there exists a portion 61 in which the material that constitutes the hollow particle is densely packed, and a portion 62 in which the density of the material that constitutes the hollow particle is low.

The portion 61 in which the material that constitutes the hollow particle is densely packed exists in the outer peripheral portion of the hollow particle, and appears as a white color in FIG. 3(a) due to the high density of the material.

In contrast, the portion 62 in which the density of the material that constitutes the hollow particle is low exists in the central portion of the hollow particle 60, and because of the low density of the material, includes both the material that constitutes the hollow particle (the portions which appear white in FIG. 3(a)) and spaces (the portions which appear black in FIG. 3(a)).

In the honeycomb filter according to the first embodiment of the present invention, the degree of solidity of the hollow particles is preferably from 20 to 90%.

The degree of solidity of the hollow particles is an index which represents the ratio between the "solid" portion and the "space" portion within the hollow particles, so that a larger degree of solidity indicates a lower proportion of spaces within the particles.

In this description, the degree of solidity is determined from an electron microscope photograph in the manner described below.

A cross-sectional image of the hollow particles that constitute the filter layer is acquired, and a cross-sectional photograph such as that shown in FIG. 3(a) is obtained.

White pixels and black pixels exist in the cross-sectional photograph, and therefore the number of white pixels that represent the "solid" portion and the number of black pixels that represent the "space" portion are counted, and the proportion of white pixels (%) is calculated based on a value of 100% for the total of all the pixels. In FIG. 3(a), the proportion of white pixels is 36.3%.

Next, image processing is applied to the cross-sectional photograph of FIG. 3(a), and a binary image such as that shown in FIG. 3(b) is obtained, in which all of the pixels inside the hollow particles are painted white.

This image corresponds with the cross-sectional photograph which would be obtained assuming all of the visible particles were solid particles (particles with a degree of solidity of 100% having no internal spaces). Then, the proportion of white pixels (%) is calculated based on a value of 100% for the total of all the pixels. In FIG. 3(b), the proportion of white pixels is 46.8%.

The degree of solidity (%) is calculated as (the proportion of white pixels in the electron microscope photograph such as FIG. 3(a) / the proportion of white pixels in the binary image such as FIG. 3(b)) × 100.

In the above example, this becomes (36.3/46.8) × 100 = 77.6 (%).

In the honeycomb filter according to the first embodiment of the present invention, the average particle size of the hollow particles that form the filter layer is from 0.3 to 2.5 µm, and more preferably from 0.5 to 0.8 µm.

If the average particle size of the hollow particles is less than 0.3 µm, then the hollow particles become too small, and formation of a filter layer on the surface of the cell walls becomes difficult. Further, if the average particle size of the hollow particles is less than 0.3 µm, then the hollow particles may sometimes infiltrate into the interior (fine pores) of the cell walls and block the fine pores, causing pressure loss to increase. On the other hand, if the average particle size of the hollow particles exceeds 2.5 µm, then the hollow particles are too large, and even when the filter layer is formed, the pore size of the filter layer is large. Consequently, PM passes through the filter layer and infiltrates the fine pores in the cell walls, causing a "depth filtration" state in which the PM is trapped inside the cell walls, which increases pressure loss.

The average particle size of the particles (hollow particles) that constitute the filter layer can be measured by the following method.

A honeycomb calcined body which constitutes the honeycomb filter is processed to prepare a sample with dimensions of 10 mm × 10 mm × 10 mm.

A single arbitrary position on the surface of the prepared sample is then observed using a scanning electron microscope (SEM). At this time, the conditions are set so that the particles that constitute the filter layer appear within a single field of view. Here, as a SEM, model FE-SEM S-4800 manufactured by Hitachi, Ltd. can be used. Further, the imaging conditions for the SEM include an accelerating voltage of 15.00 kV, a working distance (WD) of 15:00 mm, and a magnification of 10,000×.

Next, the particle size of every particle within the single field of view is measured visually. The average value of the particle sizes of all the particles measured in the single field of view is deemed the average particle size.

In the honeycomb filter according to the first embodiment of the present invention, the hollow particles which constitute the filter layer are preferably composed of a heat-resistant oxide.

Examples of the heat-resistant oxide include alumina, silica, mullite, ceria, zirconia, cordierite, zeolite, and titania. These may be used individually, or a combination of two or more of them may be used.

Of the above heat-resistant oxides, alumina is preferred.

In the honeycomb filter according to the first embodiment of the present invention, the filter layer is formed only on the surface of the cell walls of those cells in which the end section at the fluid inlet side is open and the end section at the fluid outlet side is sealed.

Because the exhaust gas is introduced into the cells from the fluid inlet side of the honeycomb filter, the PM in the exhaust gas is deposited in large amounts on the cell walls of those cells in which the end section at the fluid inlet side is open and the end section at the fluid outlet side is sealed. Accordingly, if the filter layer is formed only on the surface of the cell walls of those cells in which the end section at the fluid inlet side is open and the end section at the fluid outlet side is sealed, then the PM can be trapped by the filter layer, and depth filtration can be prevented.

It should be noted that, in the honeycomb filter according to the first embodiment of the present invention, the filter layer is preferably formed across the entire surface of the cell walls of those cells in which the end section at the fluid inlet side is open and the end section at the fluid outlet side is sealed, but there may be some portions of the surface of these cell walls where the filter layer is not formed.

In the honeycomb filter according to the first embodiment of the present invention, examples of the shapes of cross sections perpendicular to the longitudinal direction of the large volume cells and the small volume cells within the honeycomb calcined bodies include the shapes described below.

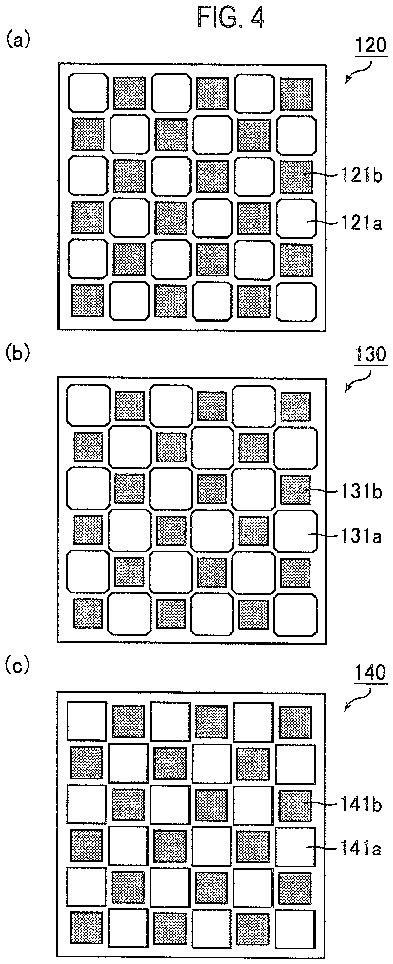

FIG. 4(a), FIG. 4(b) and FIG. 4(c) are side views schematically illustrating examples of the cell structure of a honeycomb calcined body that constitutes the honeycomb filter according to the first embodiment of the present invention.

In FIG. 4(a), FIG. 4(b) and FIG. 4(c), the filter layer is not shown.

In a honeycomb calcined body 120 illustrated in FIG. 4(a), the shape of large volume cells 121a in a cross section perpendicular to the longitudinal direction is substantially octagonal, the shape of small volume cells 121b in a cross section perpendicular to the longitudinal direction is substantially tetragonal, and the large volume cells 121a and the small volume cells 121b are arranged in an alternating pattern. Similarly, in a honeycomb calcined body 130 illustrated in FIG. 4(b), the shape of large volume cells 131a in a cross section perpendicular to the longitudinal direction is substantially octagonal, the shape of small volume cells 131b in a cross section perpendicular to the longitudinal direction is substantially tetragonal, and the large volume cells 131a and the small volume cells 131b are arranged in an alternating pattern. The honeycomb calcined body 120 illustrated in FIG. 4(a) and the honeycomb calcined body 130 illustrated in FIG. 4(b) have different area ratios between the area of a cross section perpendicular to the longitudinal direction of a large volume cell relative to the area of a cross section perpendicular to the longitudinal direction of a small volume cell (area of cross section perpendicular to the longitudinal direction of large volume cell / area of cross section perpendicular to the longitudinal direction of small volume cell).

Furthermore, in a honeycomb calcined body 140 illustrated in FIG. 4(c), the shape of large volume cells 141a in a cross section perpendicular to the longitudinal direction is substantially tetragonal, the shape of small volume cells 141b in a cross section perpendicular to the longitudinal direction is substantially tetragonal, and the large volume cells 141a and the small volume cells 141b are arranged in an alternating pattern.

In the honeycomb filter according to the first embodiment of the present invention, the area ratio of the area of a cross section perpendicular to the longitudinal direction of a large volume cell relative to the area of a cross section perpendicular to the longitudinal direction of a small volume cell (area of cross section perpendicular to the longitudinal direction of large volume cell / area of cross section perpendicular to the longitudinal direction of small volume cell) is preferably within a range from 1.4 to 2.8, and more preferably from 1.5 to 2.4.

By using the large volume cells as the fluid inlet side cells and the small volume cells as the fluid outlet side cells, a large amount of PM can be deposited on the fluid inlet side cells (large volume cells), but if the aforementioned area ratio is less than 1.4, then because the difference between the cross sectional area of the large volume cells and the cross sectional area of the small volume cells is small, the effects obtained by providing large volume cells and small volume cells are not so significant. On the other hand, if the area ratio exceeds 2.8, then the area of the cross section perpendicular to the longitudinal direction of the small volume cells becomes too small, and the friction generated when a gas such as an exhaust gas passes through the fluid outlet side cells (small volume cells) causes an increase in the pressure loss.

Next, a production method for the honeycomb filter according to the first embodiment of the present invention is described.

A production method for the honeycomb filter according to a first embodiment of the present invention is a method for producing a honeycomb filter comprising:
a ceramic honeycomb substrate in which a multitude of cells through which a fluid flows are disposed in parallel in a longitudinal direction and are separated by cell walls, each cell being sealed at an end section at either the fluid inlet side or the fluid outlet side, and
a filter layer which, among the surfaces of the cell walls, is formed on the surface of the cell walls of those cells in which the end section at the fluid inlet side is open and the end section at the fluid outlet side is sealed,
the production method comprising:
   a honeycomb calcined body production step of using a ceramic powder to produce a porous honeycomb calcined body in which a multitude of cells are disposed in parallel in a longitudinal direction and are separated by cell walls, each cell being sealed at an end section at either the fluid inlet side or the fluid outlet side,
   a droplet dispersion step of dispersing droplets containing a raw material of spherical ceramic particles in a carrier gas,
   a drying step of drying the carrier gas at 100 to 800°C, thereby forming spherical and hollow ceramic particles from the droplets containing the raw material of the spherical ceramic particles,
   an inflow step of introducing the carrier gas into those cells in which the end section at the fluid inlet side is open and the end section at the fluid outlet side is sealed, and depositing the spherical ceramic particles on the surface of the cell walls, and
   a heating step of heating the ceramic honeycomb substrate to 1100 to 1500°C.

In the production method for the honeycomb filter according to the first embodiment of the present invention, a ceramic honeycomb substrate containing honeycomb calcined bodies is prepared, and a filter layer is formed on the surface of the cell walls of the ceramic honeycomb substrate.

Prior to describing the other steps, the procedure for the steps for forming the filter layer is described below.

In the present embodiment, the filter layer is formed on the surface of the cell walls of the ceramic honeycomb substrate by performing the droplet dispersion step, the drying step, the carrier gas inflow step, and the ceramic honeycomb substrate heating step.

Furthermore, in the description of the present embodiment, the case in which the material that constitutes the filter layer is a heat-resistant oxide is described as an example.

The step of preparing the ceramic honeycomb substrate containing the honeycomb calcined bodies will be described later in the specification.

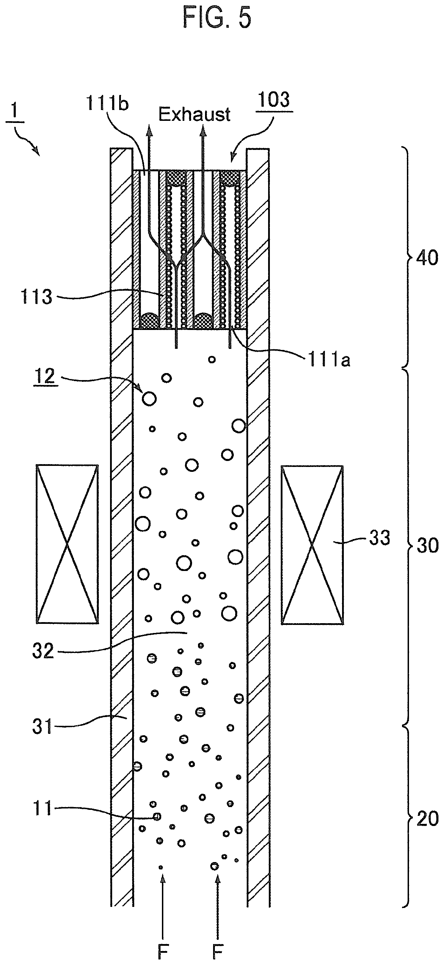

FIG. 5 is a cross-sectional view schematically illustrating an embodiment of the droplet dispersion step and the carrier gas inflow step.

FIG. 5 shows a carrier gas inflow device 1, which is a device that introduces the carrier gas into the cells of the ceramic honeycomb substrate.

The carrier gas inflow device 1 comprises a droplet dispersion section 20 which disperses droplets within the carrier gas, a pipe section 30 through which the carrier gas containing the dispersed droplets travels, and an inflow section 40 which introduces the carrier gas into the cells of the ceramic honeycomb substrate.

An example of using the carrier gas inflow device 1 to perform the droplet dispersion step and the carrier gas inflow step is described below.

In the carrier gas inflow device 1, a carrier gas F flows from the bottom of FIG. 5 toward the top. In the carrier gas inflow device 1, the carrier gas F is introduced from the bottom of the carrier gas inflow device 1, passes through the droplet dispersion section 20, the pipe section 30 and the inflow section 40, and is discharged from the top of the inflow section 40.

The carrier gas F is pressurized from the bottom to the top in FIG. 5, by a pressure difference produced by either a pressure applied from below the carrier gas inflow device or a suction applied from above the carrier gas inflow device, causing the carrier gas F to flow upward through the inside of the carrier gas inflow device 1.

A gas which does not react upon heating up to 800°C and does not react with the components in the droplets dispersed within the carrier gas is used as the carrier gas.

Examples of the carrier gas include gases such as air, nitrogen, and argon.

In the droplet dispersion section 20 of the carrier gas inflow device 1, an oxide-containing solution stored in a tank not shown in the figure is converted to droplets 11 by spraying, and dispersed within the carrier gas F.

The expression "oxide-containing solution" is a concept which includes a solution containing a heat-resistant oxide precursor which forms a heat-resistant oxide upon heating, or a slurry containing heat-resistant oxide particles.

A heat-resistant oxide precursor means a compound which is converted to a heat-resistant oxide by heating.

Examples include a hydroxide, carbonate, nitrate or hydrate of the metal that constitutes the heat-resistant oxide.

Examples of the heat-resistant oxide precursor when the heat-resistant oxide is alumina, that is an alumina precursor, include aluminum nitrate, aluminum hydroxide, boehmite, and diaspore.

Furthermore, the slurry containing heat-resistant oxide particles is a solution of heat-resistant oxide particles suspended in water.

The droplets 11 dispersed in the carrier gas F flow upward through the carrier gas inflow device 1, carried by the flow of the carrier gas F, and pass through the pipe section 30.

The pipe section 30 of the carrier gas inflow device 1 is a pipe through which the carrier gas F containing the dispersed droplets 11 passes.

A channel 32 of the pipe section 30 through which the carrier gas F passes is a space enclosed by a pipe wall 31 of the pipe.

In the carrier gas inflow device 1 used in the present embodiment, a heating mechanism 33 is provided on the pipe section 30. An example of the heating mechanism 33 is an electric heater or the like.

In the present embodiment, the pipe wall 31 of the pipe is heated using the heating mechanism 33, and the carrier gas F containing the dispersed droplets 11 is passed through the pipe section 30. Accordingly, the carrier gas F that passes through the pipe section 30 is heated, thereby heating the droplets 11 dispersed within the carrier gas F. When the droplets 11 are heated, the liquid component contained in the droplets evaporates, forming spherical ceramic particles 12.

The spherical ceramic particles 12 formed at this time are hollow particles.

In FIG. 5, the spherical ceramic particles 12, which are the hollow particles, are depicted as white circles.

When the droplets contain a heat-resistant oxide precursor, heating the carrier gas causes the heat-resistant oxide precursor to become a heat-resistant oxide (spherical ceramic particles).

In the present embodiment, it is preferable that the pipe wall 31 of the pipe is heated to 100 to 800°C using the heating mechanism 33, and that the carrier gas F containing the dispersed droplets 11 passes through the pipe in 0.1 to 3.0 seconds.

If the temperature of the heated pipe is less than 100°C, and the time taken for the carrier gas to pass through the pipe is less than 0.1 second, then the water in the droplets may not be able to be evaporated adequately. On the other hand, if the temperature of the heated pipe exceeds 800°C, and the time taken for the carrier gas to pass through the pipe exceeds 3.0 seconds, then the amount of energy required to produce the honeycomb filter becomes too large, reducing the production efficiency of the honeycomb filter.

In the present embodiment, there are no particular restrictions on the length of the pipe, but the length is preferably from 500 to 3,000 mm.

If the length of the pipe is less than 500 mm, then the water in the droplets cannot be adequately evaporated even if the carrier gas is passed through the pipe slowly.

On the other hand, if the length of the pipe exceeds 3,000 mm, then the device used to produce the honeycomb filter becomes too large, reducing the production efficiency of the honeycomb filter.

The spherical ceramic particles 12 remain dispersed within the carrier gas F, flow upward through the carrier gas inflow device 1 carried by the flow of the carrier gas F, and flow into the cells of the ceramic honeycomb substrate 103 in the inflow section 40.

In the present embodiment, a ceramic block formed by bundling a plurality of honeycomb calcined bodies together via adhesive material layers is used as the ceramic honeycomb substrate.

The ceramic honeycomb substrate 103 is disposed at the top of the carrier gas inflow device 1 so as to plug the outlet of the carrier gas inflow device 1.

As a result, the carrier gas F must necessarily flow into the interior of the ceramic honeycomb substrate 103.

In FIG. 5, a cross section of the honeycomb calcined body that constitutes the ceramic block (a similar cross section to that illustrated in FIG. 2(b)) is shown schematically as the cross section of the ceramic honeycomb substrate 103.

In the ceramic honeycomb substrate 103, the end sections of the fluid inlet side cells 111a are open, and the fluid outlet side cells 111b are sealed.

As a result, the carrier gas F flows into the ceramic honeycomb substrate 103 through the openings of the fluid inlet side cells 111a.

When the carrier gas F containing the dispersed spherical ceramic particles 12 flows into the fluid inlet side cells 111a of the ceramic honeycomb substrate 103, the spherical ceramic particles 12 accumulate on the surfaces of the cell walls 113 of the ceramic honeycomb substrate 103.

Further, in the present embodiment, the ceramic honeycomb substrate 103 is preferably heated to 100 to 800°C, so that the carrier gas F is introduced into heated cells.

When the ceramic honeycomb substrate 103 is heated to 100 to 800°C, even if any liquid components remain in the spherical ceramic particles 12, these liquid components evaporate, so that the spherical ceramic particles are deposited on the surface of the cell walls in a dried powder state.

The carrier gas F is introduced into the interior of the ceramic honeycomb substrate 103 through the openings of the fluid inlet side cells 111a, passes through the cell walls 113 of the ceramic honeycomb substrate 103, and flows out through the openings of the fluid outlet side cells 111b.

The carrier gas inflow step is performed using this type of procedure.

Subsequently, the ceramic honeycomb substrate heating step is performed.

The ceramic honeycomb substrate having the spherical ceramic particles adhered to the cell walls as a result of the carrier gas inflow step is heated at a furnace temperature of 1100 to 1500°C using a heating furnace.

An open air atmosphere, nitrogen atmosphere or argon atmosphere is preferable as the heating atmosphere.

This heating step causes a portion of the spherical ceramic particles to undergo sintering, thus forming crosslinked bodies where the spherical ceramic particles are bound to each other.

Moreover, as a result of the heating, the spherical ceramic particles adhered to the surfaces of the cell walls undergo thermal contraction, which anchors the particles strongly to the surfaces of the cell walls.

The filter layer is formed by the above steps.

In the production method for the honeycomb filter according to the first embodiment of the present invention, the steps for preparing the ceramic honeycomb substrate containing the honeycomb calcined bodies are described below.

The ceramic honeycomb substrate prepared below is a ceramic block formed by bundling a plurality of honeycomb calcined bodies together via adhesive material layers.

In the following explanation, silicon carbide is used as an example of the ceramic powder.
(1) A molding step is performed in which a honeycomb molded body is prepared by extrusion molding of a wet mixture containing the ceramic powder and a binder.
   Specifically, first, a wet mixture for producing the honeycomb molded body is prepared by mixing silicon carbide powders with different average particle sizes as the ceramic powder, an organic binder, a liquid plasticizer, a lubricant, and water.
   Next, the wet mixture is fed into an extrusion molding machine and extrusion molded to prepare a honeycomb molded body with a predetermined shape.
   Here, the honeycomb molded body is prepared using a mold that produces a cross-sectional shape having the cell structure (cell shape and cell arrangement) illustrated in FIG. 2(a) and FIG. 2(b).
(2) The honeycomb molded body is cut to a predetermined length and dried using a microwave dryer, hot air dryer, dielectric dryer, reduced pressure dryer, vacuum dryer, or freeze dryer or the like, and a sealing step is then performed in which predetermined cells are packed with a sealing material paste that becomes the sealing material, thereby sealing those cells.
   Here, the wet mixture described above can be used as the sealing material paste.
(3) After performing a degreasing step in which the honeycomb molded body is heated in a degreasing furnace to remove the organic matter in the honeycomb molded body, the degreased honeycomb molded body is transported into a calcining furnace and subjected to a calcination step, thereby preparing a honeycomb calcined body of the type illustrated in FIG. 2(a) and FIG. 2(b).
   The sealing material paste packed at the end sections of the cells is calcined by the heating and forms the sealing material.
   Furthermore, the conditions for the cutting step, the drying step, the sealing step, the degreasing step and the calcination step can employ the types of conditions conventionally used to prepare honeycomb calcined bodies.
(4) A bundling step is performed in which a plurality of honeycomb calcined bodies are sequentially laminated together via an adhesive material paste on a support stage, thereby preparing a honeycomb aggregated body having a plurality of stacked honeycomb calcined bodies.
   For the adhesive material paste, for example, a paste comprising an inorganic binder, an organic binder and inorganic particles is used. Further, the adhesive material paste may also contain inorganic fibers and/or whiskers.
(5) By heating the honeycomb aggregated body, the adhesive material paste is thermally hardened and forms an adhesive material layer, thus preparing a quadrangular prism-shaped ceramic block.
   The thermal hardening conditions for the adhesive material paste may be the types of conditions conventionally used when preparing honeycomb filters.
(6) A cutting step is performed in which the ceramic block is cut.
   Specifically, by cutting the outer periphery of the ceramic block using a diamond cutter, a ceramic block is prepared with an outer periphery that has been processed to a substantially circular cylindrical shape.
(7) An outer periphery coating layer formation step is performed in which an outer periphery coating material paste is applied to the outer peripheral surface of the substantially circular cylindrical ceramic block, and then dried and solidified to form an outer periphery coating layer.

Here, the adhesive material paste mentioned above can be used as the outer periphery coating material paste. A paste with a different composition from the above adhesive material paste may also be used as the outer periphery coating material paste.

The outer periphery coating layer need not necessarily be provided, and may be provided as required.

By providing the outer periphery coating layer, the shape of the outer periphery of the ceramic block can be neatened, enabling a ceramic honeycomb substrate with a circular cylindrical shape to be obtained.

By performing the above steps, a ceramic honeycomb substrate containing honeycomb calcined bodies can be prepared.

By subsequently subjecting the ceramic honeycomb substrate to the aforementioned droplet dispersion step, carrier gas inflow step, and ceramic honeycomb substrate heating step, the filter layer can be formed on the surface of the cell walls of the ceramic honeycomb substrate, thus preparing a honeycomb filter.

Examples of the functions and effects of the honeycomb filter according to the first embodiment of the present invention are described below.
(1) In the honeycomb filter of the present embodiment, the filter layer formed on the surfaces of the cell walls of the ceramic honeycomb substrate contains hollow particles. As a result, the heat capacity of the filter layer can be reduced compared with that of the filter layer formed on the conventional honeycomb filter disclosed in Patent Document 1. Accordingly, in the honeycomb filter of the present embodiment, when the PM accumulated on the honeycomb filter is incinerated, the amount of heat that accumulates in the filter layer from the heat generated inside the cells on which the PM has accumulated is smaller, and the heat can be easily transmitted through the filter layer and into the cell walls. As a result, the temperature difference between the filter layer and the cells can be reduced, so that the difference in thermal stress caused by this temperature difference can be reduced, enabling detachment of the filter layer to be prevented.
(2) In the honeycomb filter of the present embodiment, the degree of solidity of the hollow particles is from 20 to 90%.
   A degree of solidity that satisfies the above range is particularly suited for reducing the temperature difference between the filter layer and the cell walls.
   If the degree of solidity is less than 20%, then because the strength of the hollow particles tends to weaken, maintaining the shape of the hollow particles becomes difficult. If the degree of solidity exceeds 90%, then because the heat capacity of the filter layer increases, the effect of the invention in reducing the difference in thermal stress and preventing detachment of the filter layer may not be able to be achieved satisfactorily.
(3) In the honeycomb filter of the present embodiment, the average particle size of the hollow particles is from 0.3 to 2.5 µm. As a result, PM contained within the exhaust gas is deposited mainly on the surface of the filter layer, so that depth filtration of the PM can be prevented. Accordingly, any sudden increase in pressure loss of the honeycomb filter caused by depth filtration can be prevented.
(4) In the honeycomb filter of the present embodiment, the hollow particles are composed of a heat-resistant oxide, and the heat-resistant oxide is at least one selected from the group consisting of alumina, silica, mullite, ceria, zirconia, cordierite, zeolite and titania.
   When the hollow particles that constitute the filter layer are formed from a heat-resistant oxide in this manner, even when a regeneration process is performed to incinerate the PM, problems such as melting of the filter layer are unlikely to occur, and a honeycomb filter having excellent heat resistance can be obtained.
(5) In the honeycomb filter of the present embodiment, the thickness of the filter layer is from 10 to 100 µm.

If the thickness of the filter layer is less than 10 µm, then the PM is more likely to undergo depth filtration, meaning the honeycomb filter is prone to increases in pressure loss. On the other hand, if the thickness of the filter layer exceeds 100 µm, then although depth filtration of the PM can be prevented, because the filter layer is too thick, the pressure loss actually increases.

### EXAMPLES

The honeycomb filter of the first embodiment of the present invention is described below in more detail using specific examples. However, the present invention is not limited solely to these examples.

### (Example 1)

### (Preparation of Ceramic Honeycomb Substrate)

First, a molding step was performed by mixing 54.6% by weight of a coarse powder of silicon carbide with an average particle size of 22 µm and 23.4% by weight of a fine powder of silicon carbide with an average particle size of 0.5 µm, to which 4.3% by weight of an organic binder (methyl cellulose), 2.6% by weight of a lubricant (Unilube manufactured by NOF Corporation), 1.2% by weight of glycerol and 13.9% by weight of water were added and kneaded to obtain a wet mixture, which was then extrusion-molded.

In this step, crude honeycomb molded bodies having the same shape as the honeycomb calcined body 110 illustrated in FIG. 2(a) but with no sealing of the cells were prepared.

Next, dried honeycomb molded bodies were prepared by drying the crude honeycomb molded bodies using a microwave dryer. Subsequently, a sealing material paste was packed into predetermined cells of the dried honeycomb molded bodies, thereby sealing the cells. A part of the wet mixture described above was used as the sealing material paste. After sealing the cells, the dried honeycomb molded bodies packed with the sealing material paste were dried again using a dryer.

Subsequently, the dried honeycomb molded bodies with sealed cells were subjected to a degreasing treatment at 400°C to degrease the dried honeycomb molded bodies, and were then subjected to a calcination treatment in a normal pressure argon atmosphere at 2200°C for 3 hours.

As a result, quadrangular prism-shaped honeycomb calcined bodies were obtained.

An adhesive material paste was applied on the honeycomb calcined bodies obtained by the above steps, thus forming adhesive material paste layers, and by thermally hardening the adhesive material paste layers to form adhesive material layers, a substantially prism-shaped ceramic block composed of 16 honeycomb calcined bodies bundled together via the adhesive material layers was prepared.

For the adhesive material paste, an adhesive material paste containing 30% by weight of alumina fibers with an average fiber length of 20 µm, 21% by weight of silicon carbide particles with an average particle size of 0.6 µm, 15% by weight of a silica sol, 5.6% by weight of carboxymethyl cellulose, and 28.4% by weight of water was used.

Subsequently, a circular cylindrical ceramic block with a diameter of 142 mm was prepared by using a diamond cutter to cut the outer periphery of the prism-shaped ceramic block.

Next, an outer periphery coating material paste was applied to the outer peripheral surface of the circular cylindrical ceramic block, and the outer periphery coating material paste was thermally hardened at 120°C to form an outer periphery coating layer on the outer peripheral portion of the ceramic block.

The same paste as the adhesive material paste described above was used as the outer periphery coating material paste.

As a result of the above steps, a circular cylindrical ceramic honeycomb substrate with a diameter of 143.8 mm and a length of 150 mm was prepared.

### (Droplet Dispersion Step and Filter Layer Formation Step)

A filter layer was formed on the ceramic honeycomb substrate using the carrier gas inflow device illustrated in FIG. 5.

The ceramic honeycomb substrate was placed at the top of the carrier gas inflow device as illustrated in FIG. 5.

At this time, the ceramic honeycomb substrate was positioned so that the openings of the large volume cells, as the fluid inlet side cells, faced toward the bottom of the carrier gas inflow device.

A solution containing boehmite, which is a heat-resistant oxide precursor, was prepared as an oxide-containing solution. The boehmite concentration was 0.1 mol/l.

Droplets containing boehmite were then dispersed in the carrier gas by spraying.

The pipe wall of the pipe of the carrier gas inflow device was heated to a temperature of 450°C, and the carrier gas was introduced so as to flow toward the top of the carrier gas inflow device (the ceramic honeycomb substrate side) at a flow rate of 15.8 mm/sec, thereby evaporating the moisture within the droplets dispersed in the carrier gas. As a result of the evaporation of the moisture in the droplets that occurred as the carrier gas passed through the pipe, the droplets were converted to hollow spherical alumina particles.

The length of the pipe was 1200 mm.

The carrier gas containing the dispersed hollow spherical alumina particles was introduced into the cells of the ceramic honeycomb substrate, and the hollow spherical alumina particles were adhered to the surfaces of the cell walls.

Subsequently, the ceramic honeycomb substrate was removed from the carrier gas inflow device, and heated in a calcining furnace at 1350°C for 3 hours in an open air atmosphere.

As a result of the above steps, a honeycomb filter was produced which had a filter layer composed of hollow particles of alumina formed on the surfaces of the cell walls.

The honeycomb filter produced was subjected to the evaluations described below.

### (Measurement of Degree of Solidity)

A photograph of the filter layer of the honeycomb filter was captured using an SEM (apparatus name: FE-SEM S-4800, manufactured by Hitachi, Ltd.), and the degree of solidity was determined by measuring the numbers of pixels in the photograph in accordance with the method described above for measuring the degree of solidity. The result revealed a degree of solidity of 77.6%.

The conditions used for acquiring the SEM photograph were as follows: a backscattered electron image, an accelerating voltage of 1.0 kV, and a magnification of 30,000×.

### (Observation of State of Detachment of Filter Layer)

The state of detachment of the filter layer was observed using the following procedure.

First, the honeycomb filter was dried in a dryer at 150°C for 1 hour. Then, the honeycomb filter was immersed in water from the end section at the fluid outlet side, and subjected to ultrasonic cleaning (43 kHz) in the water for 30 minutes. Subsequently, water was introduced into the honeycomb filter from the end section at the fluid outlet side, and the water was passed through the cell walls and discharged from the end section at the fluid inlet side.

After draining the water, the honeycomb filter was placed in a dryer and dried at 150°C for 2 hours.

Then, the honeycomb filter was observed using an electron microscope to ascertain whether detachment of the filter layer had occurred.

Observation of the state of detachment of the filter layer for the honeycomb filter produced in Example 1 confirmed that no detachment had occurred, and that a robust filter layer had been formed.

The fact that no detachment of the filter layer occurred upon heating at 150°C suggests that a similar effect would be obtained even upon heating (for example, at 800°C) during PM incineration in a regeneration process, and thus no detachment would occur.

### (Other Embodiments)

In the honeycomb filter according to the first embodiment of the present invention, the filter layer is formed only on the surface of the cell walls of those cells in which the end section at the fluid inlet side is open and the end section at the fluid outlet side is sealed.

However, in a honeycomb filter according to another embodiment of the present invention, the filter layer may be formed not only on the surface of the cell walls of cells in which the end section at the fluid inlet side is open and the end section at the fluid outlet side is sealed, but also on the surface of the cell walls of cells in which the end section at the fluid inlet side is sealed and the end section at the fluid outlet side is open.

This type of honeycomb filter can be produced by immersing the ceramic honeycomb substrate in a slurry containing the hollow particles that has been prepared in advance, and then heating the resulting product.

In a production method for a honeycomb filter according to an embodiment of the present invention, the droplets may contain heat-resistant oxide particles as the raw material of the ceramic particles.

When the droplets contain heat-resistant oxide particles, hollow particles of the heat-resistant oxide can be obtained by heating the carrier gas to remove the moisture within the droplets. Moreover, by introducing hollow particles of the heat-resistant oxide into the cells, a filter layer composed of hollow particles of the heat-resistant oxide can be formed.

Further, a filter layer composed of hollow particles of the heat-resistant oxide can also be formed by introducing the droplets containing the heat-resistant oxide particles into the cells, and subsequently removing the moisture within the droplets.

In a honeycomb filter according to an embodiment of the present invention, all of the cells of the honeycomb calcined bodies that constitute the honeycomb filter may have the same shape in a cross section perpendicular to the longitudinal direction, and both the cells that are sealed and the cells that are open at one end section of the honeycomb calcined bodies may have the same area for cross sections perpendicular to the longitudinal direction of the cells.

In a honeycomb filter according to an embodiment of the present invention, the ceramic honeycomb substrate (ceramic block) may be formed from a single honeycomb calcined body.

This type of honeycomb filter formed from a single honeycomb calcined body is also called an integrated type honeycomb filter. Cordierite or aluminum titanate or the like can be used as the main constituent material of an integrated type honeycomb filter.

In a honeycomb filter according to an embodiment of the present invention, the shape of the cross section of each cell of a honeycomb calcined body in a direction perpendicular to the longitudinal direction of the honeycomb calcined body is not limited to a substantially tetragonal shape, and can be an arbitrary shape such as a substantially circular shape, substantially elliptical shape, substantially pentagonal shape, substantially hexagonal shape, substantially trapezoidal shape, or substantially octagonal shape. Further, a mixture of various shapes may also be used.

In the honeycomb filter of the present invention, the essential structural elements are that the filter layer is formed on the surface of the cell walls of the ceramic honeycomb substrate, and that the filter layer comprises hollow particles.

By appropriate combination of these essential structural elements with the various configurations described in the first embodiment and the other embodiments (for example, the structure of the filter layer, the method for forming the filter layer, the cell structure of the honeycomb calcined bodies, and the honeycomb filter production steps and the like), the desired effects can be obtained.

### DESCRIPTION OF THE REFERENCE NUMERALS

- 1: Carrier gas inflow device
- 11: Droplets
- 12: Spherical ceramic particles (hollow particles)
- 60: Hollow particles
- 100: Honeycomb filter
- 103: Ceramic honeycomb substrate (ceramic block)
- 110, 120, 130, 140: Honeycomb calcined body
- 111a, 111b, 121a, 121b, 131a, 131b, 141a, 141b: Cell
- 113: Cell wall
- 115: Filter layer
- F: Carrier gas
- G₁: Exhaust gas

## Claims

1. A honeycomb filter comprising:
a ceramic honeycomb substrate in which a multitude of cells through which a fluid flows are disposed in parallel in a longitudinal direction and are separated by cell walls, each cell being sealed at an end section at either a fluid inlet side or a fluid outlet side, and
a filter layer which, among surfaces of the cell walls, is formed on a surface of the cell walls of those cells in which the end section at the fluid inlet side is open and the end section at the fluid outlet side is sealed, wherein
the filter layer comprises hollow particles, and wherein an average particle size of the hollow particles is from 0.3 to 2.5 µm.

2. The honeycomb filter according to Claim 1, wherein a degree of solidity of the hollow particles is from 20 to 90%, said degree of solidity being determined as specified in the description.

3. The honeycomb filter according to any one of Claims 1 to 2, wherein the hollow particles are composed of a heat-resistant oxide.

4. The honeycomb filter according to Claim 3, wherein the heat-resistant oxide is at least one selected from the group consisting of alumina, silica, mullite, ceria, zirconia, cordierite, zeolite, and titania.

5. The honeycomb filter according to any one of Claims 1 to 4, wherein a thickness of the filter layer is from 10 to 100 µm.

## Patentansprüche

1. Wabenfilter, umfassend:
ein keramisches Wabensubstrat, in dem eine Vielzahl von Zellen, durch die ein Fluidum strömt, parallel in einer Längsrichtung angeordnet sind und durch Zellwände getrennt sind, wobei jede Zelle an einem Endbereich an entweder einer Fluidumeinlassseite oder einer Fluidumauslassseite verschlossen ist, und
eine Filterschicht, die in den Reihen der Oberflächen der Zellwände auf einer Oberfläche der Zellwände derjenigen Zellen ausgebildet ist, bei denen der Endbereich an der Fluidumeinlassseite offen ist und der Endbereich an der Fluidumauslassseite verschlossen ist, wobei
die Filterschicht hohle Partikel umfasst und wobei eine durchschnittliche Partikelgröße der hohlen Partikel von 0,3 bis 2,5 µm beträgt.

2. Wabenfilter nach Anspruch 1, wobei ein Festigkeitsgrad der hohlen Partikel 20 bis 90 % beträgt, wobei der Festigkeitsgrad entsprechend den Angaben in der Beschreibung bestimmt wird.

3. Wabenfilter nach einem der Ansprüche 1 bis 2, wobei die hohlen Partikel aus einem hitzeresistenten Oxid zusammengesetzt sind.

4. Wabenfilter nach Anspruch 3, wobei das hitzeresistente Oxid mindestens eines ist, das aus der Gruppe ausgewählt ist, die aus Aluminiumoxid, Siliciumdioxid, Mullit, Cerdioxid, Zirconiumoxid, Cordierit, Zeolith und Titandioxid besteht.

5. Wabenfilter nach einem der Ansprüche 1 bis 4, wobei die Dicke der Filterschicht 10 bis 100 µm beträgt.

## Revendications

1. Filtre en nid d'abeille comprenant :
un substrat en céramique en nid d'abeille dans lequel une pluralité de cellules à travers lesquelles un fluide s'écoule sont disposées en parallèle dans une direction longitudinale et sont séparées par des parois de cellule, chaque cellule étant étanchéifiée au niveau d'une section d'extrémité d'un côté d'entrée de fluide ou d'un côté de sortie de fluide, et
une couche de filtre laquelle, parmi des surfaces des parois de cellule, est formée sur une surface des parois de cellule de celles des cellules où la section d'extrémité du côté d'entrée de fluide est ouverte et la section d'extrémité du côté de sortie de fluide est étanchéifiée, dans lequel
la couche de filtre comprend des particules creuses, et dans lequel une taille moyenne de particule des particules creuses est de 0,3 à 2,5 µm.

2. Filtre en nid d'abeille selon la revendication 1, dans lequel un degré de solidité des particules creuses est de 20 à 90%, ledit degré de solidité étant déterminé tel que spécifié dans la description.

3. Filtre en nid d'abeille selon l'une quelconque des revendications 1 à 2, dans lequel les particules creuses se composent d'un oxyde résistant à la chaleur.

4. Filtre en nid d'abeille selon la revendication 3, dans lequel l'oxyde résistant à la chaleur est au moins l'un sélectionné dans le groupe formé par de l'alumine, de la silice, de la mullite, du oxyde de cérium, de la zircone, de la cordiérite, de la zéolite et du oxyde de titane.

5. Filtre en nid d'abeille selon l'une quelconque des revendications 1 à 4, dans lequel une épaisseur de la couche de filtre est de 10 à 100 *µ*m.
